# EUROPÄISCHE PATENTSCHRIFT

(11) **EP 1 234 714 B1**
(45) Veröffentlichungstag und Bekanntmachung des Hinweises auf die Patenterteilung: **30.07.2003**
(21) Anmeldenummer: 02002509.4
(22) Anmeldetag: 02.02.2002
(51) Int. Cl.: B60P 3/22, B67D 5/08

(54) **Einrichtung zur Messung und Abgabe von Flüssigkeitsmengen an Tankkraftwagen**
Device for measuring and dispensing quantities of liquid on tank-trucks
Dispositif de mesure et de distribution de quantités de liquide pour camions-citernes

(30) Priorität: 06.02.2001 DE 10105545
(43) Veröffentlichungstag der Anmeldung: 28.08.2002
(73) Patentinhaber: F.A. Sening GmbH, 25474 Ellerbek (DE)
(72) Erfinder: Aehle, Achim, 22880 Wedel (DE)
(74) Vertreter: Meyer, Ludgerus A.

(56) Entgegenhaltungen:
- EP-A- 0 950 635
- DE-C- 19 733 715
- US-A- 4 074 734

## Beschreibung

Die Erfindung betrifft eine Einrichtung zur Messung und Abgabe von Flüssigkeitsmengen an Tankkraftwagen nach dem Obergriff des Anspruchs 1.

Das Entleeren eines Tanks für Kraftstoffe, insbesondere von Tankwagen, erfolgt in der Regel dadurch, dass die abzugebende Menge zunächst von der Tankkammer über eine Entgasungseinrichtung geführt wird, in der die Flüssigkeit entgast wird und dann über einen Mengenzähler einem Abgabeventil zugeführt wird. An das Abgabeventil ist beispielsweise eine Schlauchtrommel angeschlossen.

Heutige Tankwagen enthalten unterschiedliche Tankkammern, die jeweils über die selbe Entgasungs- und Messeinrichtung, über eine geeignete Ventilsteuerung gesteuert, entleert werden. Nach der Abgabe einer bestimmten Produktart befindet sich diese Produktart zu Beginn einer weiteren Entleerung insbesondere noch in der Entgasungs- und der Mengenzählereinrichtung. Wenn die Produktart für eine weitere Abgabe gewechselt wird, ist es normalerweise nicht zu verhindern, dass eine bestimmte Menge der vorher abgegebenen Produktart mit der "neuen" Produktart vermischt wird und daher in einen Behälter für das "neue" Produkt gelangt. Aus Qualitätsgründen ist eine solche Vermischung nur bis zu einer bestimmten Menge zulässig. Die Vermischungsmenge hängt von der Gesamtmenge des abzugebenden Produkts ab, so dass der Anteil "fehlerhaften" Produkts bei einer geringen abzugebenden Menge sehr groß sein kann.

Aus eichtechnischen Gründen ist es andererseits unzulässig, nach Abgabe eines Produktes die Messanlage leer laufen zu lassen, um so möglicherweise eine Produktvermischung zu verhindern.

Aus der DE 198 21 559 A1 sind ein Verfahren und eine Einrichtung bekannt, um unterschiedliche Flüssigkeiten, die nicht vermischt werden dürfen, an einer Tankstelle mit einer Zapfsäule abzugeben, die nur einen Abgabeschlauch aufweist. Hierzu wird vor Abgabe einer Flüssigkeit, die nicht mit der Flüssigkeit eines vorangegangenen Abfüllvorgangs vermischt werden darf, der Abgabeschlauch entleert. Dies kann dadurch geschehen, dass entweder Druckluft in das rückwärtige Ende des Abgabeschlauch gepresst wird und anschließend die Flüssigkeitsreste aus der Zapfpistole heraus in die Zapfsäule gepresst oder durch einen Kanal im Abgabeschlauch zum Absaugen von Kraftstoffdämpfen abgeleitet werden. Eine weitere Möglichkeit besteht darin, das vordere Ende des Abgabeschlauchs durch eine entsprechend ausgebildete Zapfsäule zu evakuieren und ihn so zu entleeren oder das vordere Ende des Abgabeschlauch mit Druckluft zu beaufschlagen und so die Flüssigkeitsreste in einen Tank zurückzudrängen.

Der Gegenstand der EP 0 855 576 A1 hingegen betrifft ein Verfahren und eine Anlage zum Messen des Volumens einer durchströmenden Flüssigkeit, bei der Messfehler durch den Gasanteil der Flüssigkeit vermieden werden sollen. Hierzu wird neben dem Volumen der Flüssigkeitsströmung der Gasanteil der Flüssigkeit messtechnisch erfasst, und beide Messwerte werden in Beziehung zueinander gesetzt. Die in dieser Schrift behandelte Problematik der messtechnischen Erfassung der Gasanteile einer Flüssigkeit steht jedoch in keinem Zusammenhang mit dem Gegenstand der Erfindung.

Aus der DE 197 33 715 C1 sind ein Verfahren und eine Anlage zur Schwerkraft-Abgabe von Flüssigkeit aus einem Tankwagen, der mehrere Kammern aufweist, bekannt, wobei ein Vermischen verschiedener Flüssigkeiten vermieden wird, indem vor einer Abgabe zuerst die Abgabeleitung durch ein Entlüftungsventil entlüftet wird. Erst nachdem die Abgabeleitung mit der abzugebenden Flüssigkeit gefüllt wurde, beginnt der Abgabevorgang. Nach Beendigung des Abgabevorgangs werden die Abgabeleitung von den Flüssigkeitstanks durch Absperren abgetrennt und die Flüssigkeitsreste aus der Abgabeleitung entfernt. Dabei werden die Volumia der Abgabeeinrichtung über eine Messwertkorrektur berücksichtigt. Dieser Gegenstand entspricht dem Obergriff des Anspruchs 1.

Es ist Aufgabe der Erfindung, eine Einrichtung zur Messung und Abgabe von Flüssigkeitsmengen an Tankkraftwagen anzugeben, welche eine Produktvermischung bei Wechsel einer abzugebenden Produktart weitestgehend verhindert.

Diese Aufgabe wird durch die im Anspruch 1 angegebene Erfindung gelöst. Vorteilhafte Weiterbildungen der Erfindung sind in den Unteransprüchen angegeben.

Nach Beendigung einer Produktabgabe kann mit der erfindungsgemäßen Einrichtung nahezu die gesamte Strecke zwischen der Tankkammer und dem Abgabeventil entleert werden. Wenn ein "neues" Produkt abgegeben werden soll, wird der gesamte Bereich zwischen der das "neue" Produkt enthaltenen Tankkammer und dem Abgabeventil wieder befüllt, wobei die Abgabe erst dann möglich ist, wenn die gesamte Anlage ihren ursprünglichen befüllten Zustand wieder erreicht hat.

Zur selbsttätigen Steuerung der Einrichtung ist eine Ansteuereinheit vorgesehen, die mit der Be- und Entlüftungseinrichtung und dem Abgabeventil derart verbunden ist, dass bei der Entleerung der Messanlage das Abgabeventil gesperrt und die elektronische Messeinrichtung deaktiviert sind.

Sobald die Pumpe zur Entleerung der Einrichtung in Betrieb gesetzt wird und insbesondere die Be- und Entlüftungseinrichtung geöffnet hat, wird ein Signal an die Ansteuereinheit gesendet, welches dann eine Betätigung des Absperrventils verhindert. Gleichzeitig wird die elektronische Messeinrichtung inaktiviert, so dass weder eine Vorwärts- noch eine Rückwärtszählung möglich ist. Erst wenn die gesamte Messanlage vor der Abgabe eines "neuen" Produkts wieder befüllt ist, und die Be- und Entlüftungseinrichtung geschlossen ist, können die elektronische Messeinrichtung und das Absperrventil wieder in Betrieb genommen werden.

Insbesondere ist die Be- und Entlüftungseinrichtung mit einem oder mehreren Flüssigkeitssensoren versehen, die erst bei vollständig gefüllter Messanlage eine Öffnung des Absperrventils ermöglichen.

Mit der Erfindung ist es daher möglich, Vermischungen von Produkten weitestgehend zu verhindern. Damit können auch kleinere Mengen unterschiedlicher Produkte abgegeben werden, ohne dass eine zu große Vermischung zwischen unterschiedlichen Produkten stattfindet.

In einer bevorzugten Ausführungsform ist vorgesehen, dass die Verbindung zwischen dem Anschlussstutzen und der Messeinrichtung eine Entgasungseinrichtung aufweist, an deren unterem Ende der Entleerungsanschluss angeordnet ist, und dass das Abgabeventil niveaumäßig oberhalb einer Auslassöffnung der Entgasungseinrichtung angeordnet ist, an die die Verbindungsleitung angeschlossen ist. So wird die abzugebende Flüssigkeit entgast, bevor sie durch die Messeinrichtung strömt, so dass der Gasanteil der abzugebenden Flüssigkeit keinen Messfehler hervorruft.

Vorzugsweise ist eine kombinierte Be- und Entlüftungseinrichtung vorhanden, welche sowohl der Be- und Entlüftung der Entgasungseinrichtung als auch der Be- und Entlüftung der Verbindungsleitung zwischen der unteren Auslassöffnung der Entgasungseinrichtung und dem Abgabeventil einschließlich der Messeinrichtung dient.

Vorzugsweise befindet sich die Be- und Entlüftungseinrichtung an der Oberseite der Entgasungseinrichtung oder ist in die Entgasungseinrichtung integriert. Dadurch lässt sich der zusätzliche apparatemäßige Aufwand reduzieren.

Insbesondere ist die Be- und Entlüftungseinrichtung mit einem oder mehreren Flüssigkeitssensoren versehen, welchen einen Lufteinlass in die Entgasungseinrichtung bzw. die Verbindungsleitung erst dann öffnen, wenn das Flüssigkeitsniveau in der Entgasungseinrichtung unter einen bestimmten Schaltwert abgefallen ist.

Die erfindungsgemäße Einrichtung lässt bei geringem Aufwand die Abgabe unterschiedlicher Produkte auch in geringen Mengen zu, ohne dass eine Vermischung der Produkte zu befürchten ist. Die eichtechnischen Vorschriften bleiben erfüllt, da durch die erfindungsgemäße Einrichtung Zählergebnisse und abzugebende Mengen unbeeinflusst bleiben. Die Erfindung ist daher insbesondere für kleine Abgabemengen unterschiedlicher Art vorteilhaft einzusetzen.

Die Erfindung wird nachstehend anhand eines Ausführungsbeispiels näher erläutert.

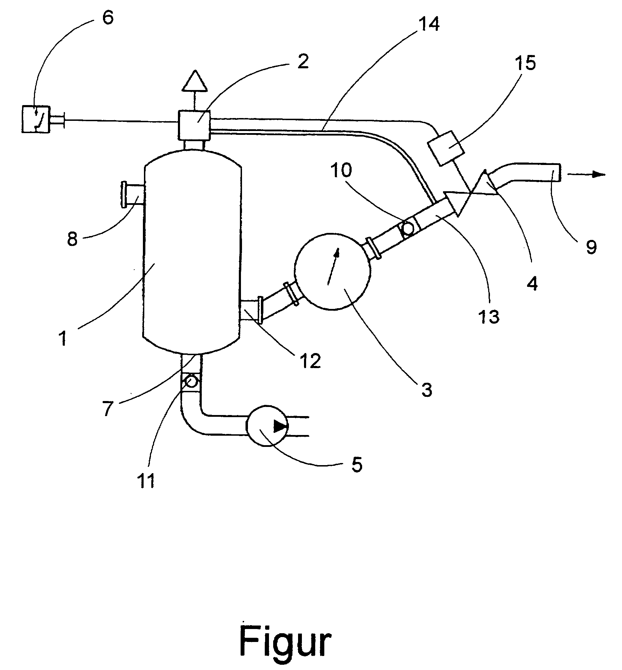

Die einzige Figur zeigt eine Schemazeichnung einer erfindungsgemäßen Einrichtung.

Die Figur zeigt eine Einrichtung zur Entleerung einer Messanlage, die einen Anschlussstutzen 8 zum Anschluss an einer Tankkammer oder einem zu mehreren Tankkammern führenden Verteilerventil aufweist. Die Entgasungseinrichtung 1 üblicher Bauart ist im seitlichen unteren Bereich mit einer Auslassöffnung 12 versehen, an die eine Verbindungsleitung 13 angeschlossen ist. Diese enthält einen Mengenzähler mit elektronischer Messeinrichtung 3 und führt auf ein Abgabeventil 4, dass niveaumäßig oberhalb der Auslassöffnung 12 angeordnet ist. An das Abgabeventil 4 können über einen Anschluss 9 eine oder mehrere Schlauchtrommeln angeschlossen werden.

Der Entgasungseinrichtung 1 enthält an seiner Oberseite eine Be- und Entlüftungseinrichtung 2, welche insbesondere mit einem Flüssigkeitssensor ausgebildet ist. Die Be- und Entlüftungseinrichtung 2 kann an einen oben liegenden Stutzen der Entgasungseinrichtung 1 angeflanscht sein. Zwischen dem oberen Ende der Verbindungsleitung 13 vor dem Abgabeventil 4 und der Be- und Entlüftungseinrichtung 2 verläuft eine Be- und Entlüftungsleitung 14.

Am tiefsten Punkt der Entgasungseinrichtung 1 befindet sich ein Entleerungsanschluss 7, der über ein Rückschlagventil 11 zu einer Pumpe 5 geführt ist. Der Auslass der Pumpe 5 führt entweder in einen gesonderten Aufnahmetank oder über eine geeignete Ventilsteuerung zu den verschiedenen Produktkammern des Tankwagens.

Zu Sicherungszwecken befindet sich in der Verbindungsleitung 13 noch ein Rückschlagventil 10, welches zwecks des Entleerungsvorganges entsperrt werden kann.

Die Funktionsweise der erfindungsgemäßen Einrichtung stellt sich wie folgt dar:

Im Betriebszustand der Einrichtung sind sowohl die Entgasungseinrichtung 1 als auch die Verbindungsleitung 13 und der Mengenzähler 3 mit Flüssigkeit befüllt. Der Entleerungsanschluss 7 ist abgesperrt bzw. die Pumpe 5 verhindert im abgeschalteten Zustand eine Abgabe von Flüssigkeit aus dem Entgasungseinrichtung 1.

Bei Betätigung des Abgabeventils 4 wird Flüssigkeit von der Tankkammer über den Anschlussstutzen 8 in die Entgasungseinrichtung 1 geführt, und von dort über die Auslassöffnung 12, den Mengenzähler 3 und das Abgabeventil 4 an den Anschluss 9. Die Be- und Entlüftungseinrichtung 2 ist dabei geschlossen.

Wenn die Produktabgabe beendet ist, wird das Abgabeventil 4 gesperrt. Nun kann die Pumpe 5 in Betrieb genommen werden, so dass der Flüssigkeitsstand in der Entgasungseinrichtung 1 absinkt. Dadurch öffnet sich die Belüftungseinrichtung 2, welche dann ein pneumatisches oder elektrisches Signal an die Ansteuereinheit 6 abgibt. Dieses führt dazu, dass über die Steuerung 15 das Abgabeventil 4 gegen Betätigung gesperrt und der Mengenzähler 3 mit Messeinrichtung inaktiviert werden. Dadurch wird verhindert, dass Produkt gemessen und abgegeben wird. Die Entleerung des Mengenzählers 3 führt auch zu keiner Änderung des Zählerstandes.

Durch die Entleerung der Entgasungseinrichtung 1 und die geöffnete Be- und Entlüftungseinrichtung 2 füllt sich der Entgasungseinrichtung 1 nun mit Luft. Ferner werden die Verbindungsleitung 13 und der Mengenzähler 3 über die Be- und Entlüftungsleitung 14 belüftet. Das Rückschlagventil 10 ist so ausgebildet, dass es seine Funktion im Flüssigkeitsbetrieb erfüllt, jedoch im Belüftungsbetrieb eine Entleerung der Verbindungsleitung 13 zulässt.

Sobald sowohl die Entgasungseinrichtung 1 als auch die Verbindungsleitung 13 und der Mengenzähler 3 vollständig entleert sind, befindet sich in der gesamten Messanlage allenfalls noch Benetzungsfeuchte.

Bei erneuter Produktabgabe wird die Anlage bei gesperrtem Entleerungsanschluss 7 zunächst mit dem "neuen" Produkt wiederbefüllt, bis der Entgasungseinrichtung 1 und die Verbindungsleitung 13 einschließlich Mengenzähler 3 wieder vollständig befüllt sind. Sobald die Be- und Entlüftungseinrichtung 2 vollständigen Flüssigkeitsstand festgestellt hat, wird ein entsprechendes Signal an die Ansteuereinheit 6 geliefert und der Mengenzähler mit elektronischer Messeinrichtung 3 und das Abgabeventil 4 werden freigeschaltet. Nun kann das "neue" Produkt abgegeben werden.

Wenn es gewünscht ist, auch die im angeschlossenen Schlauch vorhandene Restmenge eines Produktes zu berücksichtigen, kann das am Ende des Schlauches angeordnete Ventil im Sinne der Erfindung als Abgabeventil 4 betrachtet werden, wobei die Be- und Entlüftungsleitung 14 dann bis zum Ende des Schlauches unmittelbar vor das Abgabeventil geführt ist. In diesem Fall ist eine Selbstentleerung des Schlauches in der Regel nicht möglich, so dass die Entleerung des Schlauches durch Druckluftunterstützung ermöglicht werden kann.

Diese Druckluftunterstützung kann auch verwendet werden, beispielsweise um den Entleerungsvorgang der Messeinrichtung zu beschleunigen oder um Ausbildungen der Einrichtung, welche ein Selbstauslaufen der Anlage möglicherweise verhindern, funktionssicher zu machen.

Anstelle einer Ausbringung von Druckluft kann auch vorgesehen sein, dass die Pumpe 5 ausreichendes Vakuum ausbildet, um die gesamte Messanlage, ggf. einschließlich des Schlauches, abzusaugen.

Wenn nach einer Produktabgabe in einem weiteren Abgabevorgang das gleiche Produkt abgegeben werden soll, kann es vorteilhaft sein, zwischen solchen Produktabgaben keine Restentleerung durchzuführen.

Mit dem erfindungsgemäßen System lässt sich sicherstellen, dass eine Messanlage auch im eichpflichtigen Verkehr vollständig entleert werden kann, ohne dass Mengenungenauigkeiten oder Produktvermischungen entstehen.

### Bezugzeichenliste

- 1: Entgasungseinrichtung
- 2: Be- und Entlüftungseinrichtung
- 3: Mengenzähler mit elektronischer Messeinrichtung
- 4: Abgabeventil
- 5: Pumpe
- 6: Ansteuereinheit für elektronische Messeinrichtung
- 7: Entleerungsanschluss
- 8: Anschlussstutzen
- 9: Anschluss, z.B. an Schlauchtrommel
- 10: Rückschlagventil entsperrbar
- 11: Rückschlagventil
- 12: Auslassöffnung
- 13: Verbindungsleitung
- 14: Be- und Entlüftungseinrichtung
- 15: Steuerung

## Patentansprüche

1. Einrichtung zur Messung und Abgabe von Flüssigkeitsmengen an Tankkraftwagen,
- mit einem Anschlussstutzen (8), mit der die Einrichtung an einen Flüssigkeitstank angeschlossen werden kann,
- mit einem Abgabeventil (4),
- mit einer Verbindungsleitung (13), über die der Anschlussstutzen (8) mit dem Abgabeventil (4) verbunden ist und die einen Mengenzähler mit elektronischer Messeinrichtung (3) aufweist, und
- mit einer Ansteuereinheit (6) mit dem Abgabeventil (4) derart verbunden ist, dass bei einer Entleerung der Einrichtung der Mengenzähler mit elektronischer Messeinrichtung (3) inaktiviert ist,
**dadurch gekennzeichnet,**
- **dass** ein unterer Entleerungsanschluss (7) über eine Pumpe (5) mit einem Aufnahmebehälter verbunden ist,
- **dass** das Abgabeventil (4) niveaumäßig oberhalb des Entleerungsanschlusses (7) angeordnet ist,
- **dass** eine niveaumäßig oberhalb des Abgabeventils (4) angeordnete Be- und Entlüftungseinrichtung (2) mit der Verbindungsleitung (13) verbunden ist,
- **dass** die Ansteuereinheit (6) mit der Be- und Entlüftungseinrichtung (2) verbunden ist, und
- **dass** bei der Entleerung der Einrichtung das Abgabeventil (4) gesperrt, die Pumpe (5) in Betrieb und die Be- und Entlüftungseinrichtung (2) geöffnet sind.

2. Einrichtung nach Anspruch 1, **dadurch gekennzeichnet,**
- **dass** zwischen der Verbindungsleitung (13) mit der Messeinrichtung (3) und dem Anschlussstutzen (8) eine Entgasungseinrichtung (1) vorgesehen ist, an deren unterem Ende der Entleerungsanschluss (7) angeordnet ist, und
- **dass** das Abgabeventil (4) niveaumäßig oberhalb einer Auslassöffnung (12) der Entgasungseinrichtung (1) angeordnet ist, an die die Verbindungsleitung (13) angeschlossen ist.

3. Einrichtung nach Anspruch 2, **dadurch gekennzeichnet, dass** die Entgasungseinrichtung (1) die Be- und Entlüftungseinrichtung (2) enthält.

4. Einrichtung nach Anspruch 3, **dadurch gekennzeichnet, dass** die Be- und Entlüftungseinrichtung (2) an der Oberseite der Entgasungseinrichtung (1) angeordnet ist.

5. Einrichtung nach Anspruch 1, 2, 3 oder 4 **dadurch gekennzeichnet, dass** die Be- und Entlüftungseinrichtung (2) ein oder mehrere Flüssigkeitssensoren enthält.

6. Einrichtung nach Anspruch 5 **dadurch gekennzeichnet, dass** die Sperrung des Abgabeventils (4) und die Inaktivierung des Mengenzählers (3) bei Erkennung des Flüssigkeitsabfalls durch den/die Flüssigkeitssensoren ausgelöst werden.

7. Einrichtung nach einem oder mehreren der vorhergehenden Ansprüche, **dadurch gekennzeichnet, dass** das Abgabeventil (4) erst nach vollständiger Wiederbefüllung der Verbindungsleitung (13) öffnenbar ist.

## Claims

1. Device for measuring and releasing amounts of liquid in fuel tankers,
- with a connection pipe (8) by means of which the device can be connected to a tank for containing liquid,
- with a release valve (4),
- with a connection line (13) via which the connection pipe (8) is connected to the release valve (4) and which has a flow rate meter with an electronic measuring device (3), and
- with a control unit (6) that is connected to the release valve (4) in such a way that, when the device is being emptied, the flow rate meter with electronic measuring device (3) is inactivated,
**characterised in that**
- a lower discharge pipe (7) is connected via a pump (5) to a receiver,
- the release valve (4) is arranged at a level above the discharge pipe (7),
- an aeration and de-aeration device (2) arranged above the release valve (4) is connected to the connection line (13),
- the control unit (6) is connected to the aeration and de-aeration device (2), and
- when emptying the device the release valve (4) is closed, the pump (5) is in operation, and the aeration and de-aeration device (2) is open.

2. Device according to claim 1, **characterised in that**
- between the connection line (13) with the measuring device (3), and the connection pipe (8), there is provided a degassing device (1) at the lower end of which is arranged the discharge pipe (7), and
- the release valve (4) is arranged at a level above an outlet opening (12) of the degassing device (1) to which the connection line (13) is connected.

3. Device according to claim 2, **characterised in that** the degassing device 1 contains the aeration and de-aeration device (2).

4. Device according to claim 3, **characterised in that** the aeration and de-aeration device (2) is arranged on the top of the degassing device (1).

5. Device according to claim 1, 2, 3 or 4, **characterised in that** the aeration and de-aeration device (2) contains one or more liquid sensors.

6. Device according to claim 5, **characterised in that** the closure of the release valve (4) and the inactivation of the flow rate meter (3) are triggered when a drop in liquid is detected by the liquid sensor(s).

7. Device according to one of the preceding claims, **characterised in that** the release valve (4) can be opened only after the connection line (13) has been completely refilled.

## Revendications

1. Dispositif de mesure et de distribution de quantités de liquide pour des camions-citernes, comportant
- un raccord (8) grâce auquel le dispositif peut être raccordé à un réservoir de liquide,
- une soupape de distribution (4),
- une conduite de liaison (13) grâce à laquelle le raccord (8) est relié à la soupape de distribution (4) et qui comporte un volucompteur avec un dispositif de mesure électronique (3), et
- une unité de commande (6) qui est reliée à la soupape de distribution (4) de telle sorte que lorsque le dispositif est vidé, le volucompteur avec le dispositif de mesure électronique (3) est désactivé,
**caractérisé**
- **en ce qu'**un raccord d'évacuation inférieur (7) est relié à un récipient grâce à une pompe (5),
- **en ce que** la soupape de distribution (4) est disposée au-dessus du niveau du raccord d'évacuation (7),
- **en ce qu'**un dispositif d'aérage et de désaérage (2) disposé au-dessus du niveau de la soupape de distribution (4) est relié à la conduite de liaison (13),
- **en ce que** l'unité de commande (6) est reliée au dispositif d'aérage et de désaérage (2), et
- **en ce que** lors de l'évacuation du dispositif, la soupape de distribution (4) est fermée, la pompe (5) est en marche et le dispositif d'aérage et de désaérage (2) est ouvert.

2. Dispositif selon la revendication 1, **caractérisé**
- **en ce qu'**il est prévu, entre la conduite de liaison (13) pourvue du dispositif de mesure (3) et le raccord (8), un dispositif de dégazage (1) à l'extrémité inférieure duquel est disposé le raccord d'évacuation (7), et
- **en ce que** la soupape de distribution (4) est disposée au-dessus du niveau d'une ouverture de sortie (12) du dispositif de dégazage (1) auquel la conduite de liaison (13) est raccordée.

3. Dispositif selon la revendication 2, **caractérisé en ce que** le dispositif de dégazage (1) contient le dispositif d'aérage et de désaérage (2).

4. Dispositif selon la revendication 3, **caractérisé en ce que** le dispositif d'aérage et de désaérage (2) est disposé sur le côté supérieur du dispositif de dégazage (1).

5. Dispositif selon la revendication 1, 2, 3 ou 4, **caractérisé en ce que** le dispositif d'aérage et de désaérage (2) contient un ou plusieurs capteurs de liquide.

6. Dispositif selon la revendication 5, **caractérisé en ce que** la fermeture de la soupape de distribution (4) et la désactivation du volucompteur (3) sont déclenchées par le ou les capteurs de liquide lorsque la baisse de liquide est détectée.

7. Dispositif selon l'une au moins des revendications précédentes, **caractérisé en ce que** la soupape de distribution (4) n'est apte à être ouverte qu'après le remplissage complet de la conduite de liaison (13).
